# EUROPEAN PATENT SPECIFICATION

(11) **EP 3 552 894 B1**
(45) Date of publication and mention of the grant of the patent: **08.02.2023**
(21) Application number: 17877878.3
(22) Date of filing: 07.12.2017
(51) Int. Cl.: B60T 17/00, B01D 53/26

(54) **AIR SUPPLY SYSTEM**
LUFTZUFUHRSYSTEM
SYSTÈME D'ALIMENTATION EN AIR

(30) Priority: 08.12.2016 JP 2016238362
(43) Date of publication of application: 16.10.2019
(73) Proprietor: Nabtesco Automotive Corporation, Tokyo 102-0093 (JP)
(72) Inventor: MINATO, Ichiro, Tokyo 102-0093 (JP); MATSUIE, Nobushige, Tokyo 102-0093 (JP); SHIMOMURA, Takeo, Tokyo 102-0093 (JP)
(74) Representative: Grünecker Patent- und Rechtsanwälte PartG mbB
(86) International application number: PCT/JP2017/044100
(87) International publication number: WO 2018/105711

(56) References cited:
- WO-A1-02/24506
- WO-A1-2015/170737
- WO-A2-2012/067215
- DE-A1-102006 023 681
- DE-A1-102006 048 071
- DE-B4-102006 023 681
- JP-A- 2008 279 370
- JP-A- 2010 221 179
- JP-A- 2011 025 814
- JP-A- 2012 140 107
- JP-A- 2014 079 757
- JP-A- 2015 105 020
- JP-A- 2015 128 986

## Description

### TECHNICAL FIELD

The present invention relates to an air supply system according to the preamble of claim 1.

### BACKGROUND

Such an air supply system is known from WO 2015/170737 A1, which is considered to represent the closest prior art. More specifically, this document discloses an air supply system having a check valve, a discharge valve, an electromagnetic valve and an air dryer ECU. The electromagnetic valve is arranged in a detour passage which allows air to flow back from the check valve to a drying container when this electromagnetic valve is opened. The drying container serves to remove moisture and oil from the air supplied.

JP 2012 140107 A proposes a compressed air supply system, wherein a discharge pipe of a compressor is connected to an inflow pipe, and an air dryer is connected to the inflow pipe. The air dryer houses a drying agent for removing moisture and other foreign matter contained in the compressed air. A branch chamber is connected downstream of the air dryer by a supply passage in which a throttle and a check valve are arranged in parallel.

JP 2008 279370 A shows a compressed air supply system, including an air compressor for discharging compressed air, a dryer for removing foreign matter in the compressed air, and an air tank for storing a part of compressed air after passing through the dryer. In the passage connected to the air tank from the downstream side of the dryer, a check valve for preventing the compressed air of the air tank from flowing back is provided.

A pneumatic brake system of a vehicle such as a truck, a bus, or a construction machine includes a service brake mechanism (foot brake mechanism) and a parking brake mechanism. An air supply system for supplying dried compressed air to each mechanism is arranged between a compressor, which supplies compressed air, and the service brake mechanism and the parking brake mechanism. Recently, an air supply system controlled by an electronic control unit (ECU) has been proposed (refer to, for example, JP 2007 326516 A).

Compressed air contains moisture suspended in the atmosphere and oil that lubricates the inside of a compressor. The compressed air containing the moisture and the oil entering a system may cause rust and swell rubber rings (for example, O-rings). This may result in operational failure. Thus, in an air supply system, an air dryer for removing moisture and oil from compressed air is arranged downstream of the compressor of an air supply line (refer to, for example, JP H10 296038 A). The air dryer includes a filter and desiccant such as silica gel or zeolite. The air dryer performs a dehumidifying action for removing moisture and oil and a regenerative operation for removing moisture and oil adsorbed to desiccant and emitting the removed moisture and oil to the outside of the air supply line from the air dryer.

### SUMMARY OF THE INVENTION

### Problems that the Invention is to Solve

When the moisture and oil removed from compressed air accumulates in the air dryer, the functionality of the dehumidifying action of the air dryer decreases. For this reason, the regenerative operation is performed to recover the decrease in the functionality of the dehumidifying action. In a structure in which the air supply system includes an ECU, a command from the ECU can cause the regenerative operation to be performed. However, in this case, weather-resistant wires and connectors need to be arranged between the ECU and the air dryer.

Accordingly, it is an objective of the present invention to provide an air supply system that limits increases in the number of wires and connectors.

### Means for Solving the Problem

The present invention achieves this objective by providing an air supply system having the features of independent claim 1. Dependent claims 2 to 6 relate to preferred embodiments of the present invention.

An air supply system according to the present invention comprises a non-return valve that allows air to flow from an upstream side to a downstream side, the air having been supplied from a compressor, and moisture and oil contained in the air having been removed from the air by a removal device, a discharge device that opens a section between the compressor and the removal device to an atmosphere when an air pressure downstream of the non-return valve is higher than a predetermined pressure, a regenerative device that supplies the air downstream of the non-return valve in a direction of the discharge device from the non-return valve to the removal device by opening a detour passage arranged in parallel with the non-return valve based on supply of electricity, a switching circuit that receives a value of the air pressure downstream of the non-return valve and supplies electricity to the regenerative device to operate the regenerative device when the value of the air pressure is in a predetermined range, and a pneumatic sensor that outputs voltage corresponding to the air pressure detected on the downstream side of the non-return valve. The switching circuit receives the voltage output by the pneumatic sensor as the value of the air pressure downstream of the non-return valve and supplies electricity to the regenerative device to operate the regenerative device when the received voltage is a predetermined voltage. A power line that branches from a power line for the pneumatic sensor is connected to the regenerative device, and the switching circuit supplies electricity to the regenerative device by completing the branched power line.

Typically, when the ECU is used to operate the air drying circuit, a command from the ECU is used to operate the air drying circuit. However, this requires new wires and connectors having weather resistance to be provided between the ECU and the air drying circuit (air drier). With the above-described structure, the switching circuit receives a value of the air pressure downstream of the non-return valve to operate the regenerative device when the value of the air pressure is in the predetermined range. That is, since the value of the air pressure downstream of the non-return valve is received by the switching circuit directly, this allows for elimination or reduction of wires and connectors between the ECU and the switching circuit. Thus, increases in the number of the wires and connectors are reduced.

Further, the switching circuit directly receives voltage output by the pneumatic sensor and operates the regenerative device based on the received voltage. That is, since the switching circuit directly receives the output voltage of the pneumatic sensor, this allows for elimination or reduction of wires and connectors between the ECU and the switching circuit. This also keeps the determination accuracy high because a determination is made based on the output voltage of the pneumatic sensor.

Still further, the power lines of the regenerative device are shared with the pneumatic sensor. Thus, increases in the number of wires and connectors are prevented or limited in the power lines.

In an embodiment, the switching circuit may use, as the predetermined voltage, a start voltage that starts supply of electricity to the regenerative device and a stop voltage that stops the supply of the electricity started by the start voltage, and the start voltage may be set to be higher than the stop voltage.

In such a structure, after the air pressure becomes high, the regenerative device can be operated while the air pressure is decreasing. This prevents the regenerative operation from being performed while the air pressure is increasing. Further, the regenerative of the removal device can be efficiently performed by starting the regenerative operation from a high air pressure.

In an embodiment, the air supply system may further include a humidity sensor that detects humidity, the humidity sensor may close a switch when the detected humidity is in a predetermined range, and the switch may be connected in series with the regenerative device in a middle of the branched power line.

When the humidity of air is high, a large amount of moisture is dehumidified and thus the regenerative operation needs to be performed. In contrast, when the humidity of air is low, a small amount of moisture is dehumidified and thus the regenerative operation does not need to be performed. In such a structure, when the humidity is a predetermined humidity, the regenerative device is supplied with power to execute the regenerative operation. In contrast, when the humidity is not the predetermined humidity, the regenerative device is not supplied with power and the regenerative operation is not executed. This prevents compressed air from being consumed through the regenerative operation.

In an embodiment, the pneumatic sensor may detect an air pressure downstream of a protection valve arranged downstream of the non-return valve.

In such a structure, the air pressure downstream of the protection valve supplied to the brake circuit and the like can be detected using the pneumatic sensor, which is usually arranged.

In an embodiment, the protection valve may be a first protection valve, the pneumatic sensor may be a first pneumatic sensor, and the switching circuit may be a first switching circuit. The air supply system may further include a second protection valve arranged in parallel with the first protection valve, a second pneumatic sensor that detects an air pressure downstream of the second protection valve, and a second switching circuit connected to the second pneumatic sensor. The second switching circuit may receive voltage output by the second pneumatic sensor and opens the discharge device to the atmosphere when the received voltage is a predetermined voltage.

In such a structure, the second pneumatic sensor and the second switching circuit can be arranged close to each other. This allows for elimination or reduction of wires and connectors between the ECU and the switching circuit. This also keeps the determination accuracy high because a determination is made based on the output voltage of the second pneumatic sensor.

In an embodiment, the air supply system may further include a governor device to which a power line that branches from a power line for the second pneumatic sensor is connected via the second switching circuit, the governor device supplying an air pressure to the discharge device when supplied with electricity through the power line. The discharge device may be opened to the atmosphere based on the air pressure supplied from the governor device, and the second switching circuit may supply electricity to the governor device by completing the branched power line.

In such a structure, the power lines connected to the governor device, which operates the discharge device, is shared with the second pneumatic sensor. Thus, increases in the number of wires and connectors are prevented or limited in the power lines.

### EFFECT OF THE INVENTION

In the present invention, increases in the number of wires and connectors are limited.

### BRIEF DESCRIPTION OF THE DRAWINGS

Fig. 1 is a diagram showing the schematic configuration of a brake system provided in a tractor and a trailer.
Fig. 2 is a block diagram showing the schematic configuration of an air supply system according to a first embodiment.
Fig. 3A is a graph showing how the air pressure varies in the air supply system of the first embodiment.
Fig. 3B is a graph showing an example of timing at which a switching circuit opens and closes a circuit in correspondence with the variation in the air pressure in the air supply system of the first embodiment.
Fig. 3C is a graph showing another example of timing at which the switching circuit opens and closes the circuit in correspondence with the variation in the air pressure in the air supply system of the first embodiment.
Fig. 4 is a block diagram showing the schematic configuration of an air supply system according to a second embodiment.
Fig. 5 is a block diagram showing the schematic configuration of an air supply system according to a third embodiment.
Fig. 6 is a block diagram showing the schematic configuration of an air supply system according to a fourth embodiment.
Fig. 7 is a block diagram showing the schematic configuration of an air supply system according to a fifth embodiment.

### MODES FOR CARRYING OUT THE INVENTION

### First Embodiment

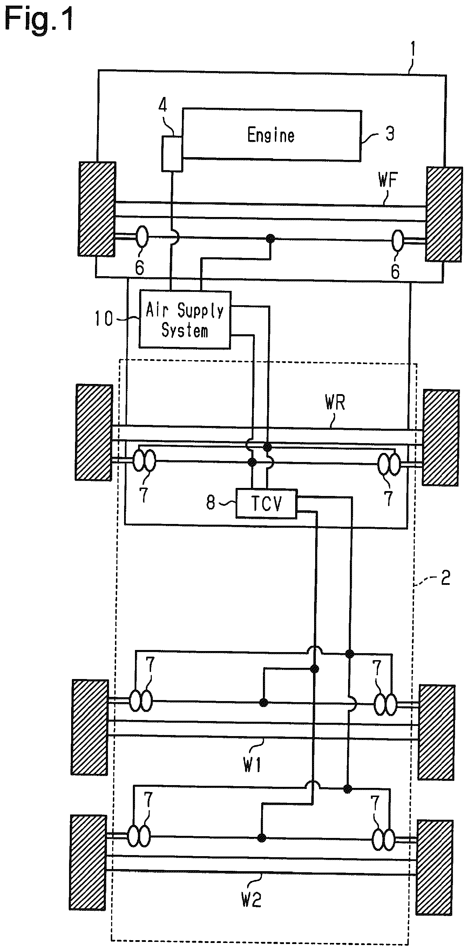

Fig. 1 shows a first embodiment in which an air supply system 10 is applied to a brake system of an articulated vehicle. The brake system has parking brakes and service brakes serving as brakes using compressed dry air to drive the brakes. The articulated vehicle is a vehicle in which a trailer is connected to a tractor.

### Overall Configuration of Brake System

The brake system of the articulated vehicle will now be described with reference to Fig. 1. A tractor 1 that tows a trailer 2 has a front axle WF and a rear axle WR, to each of which two wheels are attached. Each wheel of the front axle WF is provided with a service brake chamber 6 for actuating only the service brake. Each wheel of the rear axle WR is provided with a spring brake chamber 7 for actuating the service brake and the parking brake. When supplied with air, the service brake mechanism of the service brake chambers 6 or the spring brake chambers 7 actuates the service brakes. When air is discharged, the service brake mechanism releases (de-actuates) the service brakes. When supplied with air, the parking brake mechanism of the spring brake chambers 7 releases the parking brakes. When air is discharged, the parking brake mechanism actuates the parking brakes.

The trailer 2 is provided with a first axle W1 and a second axle W2. Each wheel of the trailer 2 is provided with a spring brake chamber 7 for actuating the service brake and the parking brake.

The tractor 1 includes an engine 3, a compressor 4, and the air supply system 10. The compressor 4 is driven by the power of the engine 3. The air supply system 10 dries and cleans compressed air supplied from the compressor 4 and supplies the air to the service brake circuit and the park brake circuit.

A trailer control valve (TCV) 8 incorporated in a second service brake circuit and a second parking brake circuit is connected to a predetermined port of the air supply system 10. The trailer control valve 8 controls supply and discharge of air to and from the pneumatic circuits of the trailer 2, thereby actuating and releasing the service brakes and the parking brakes of the trailer 2.

### Configuration of Air Supply System

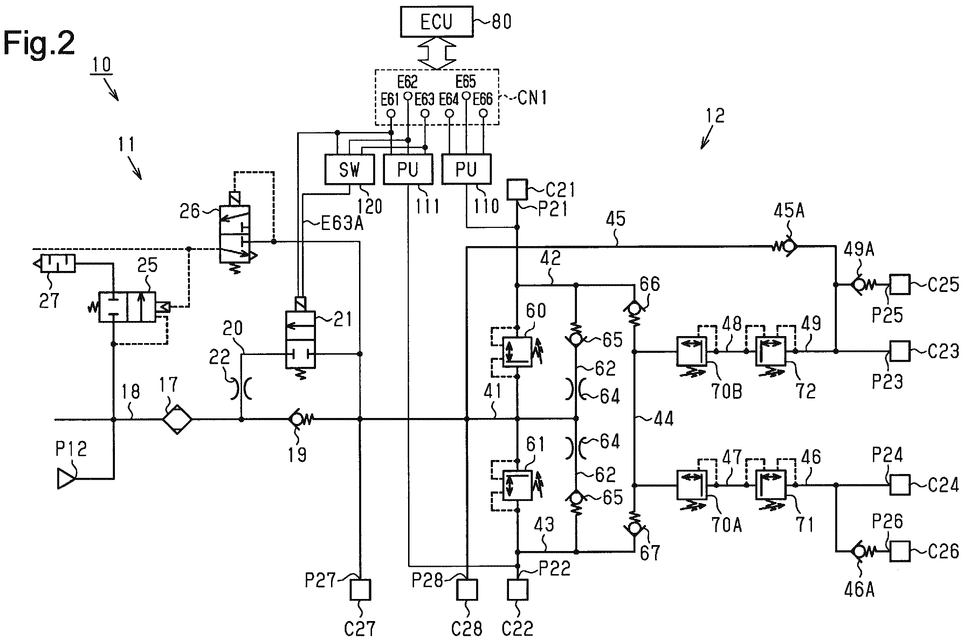

The configuration of the air supply system 10 will now be described with reference to Fig. 2. In the air supply system 10, wires E61 to E66 are connected to an ECU 80 serving as a controller via a connector CN1. Other wires and other connectors will not be described. The ECU 80 includes a calculation unit, a volatile storage unit, and a non-volatile storage unit. In accordance with programs stored in the non-volatile storage unit, the ECU 80 provides the air supply system with command values.

Using the command values of the ECU 80, the compressor 4 is switched between an actuated state (load state), in which air is compressed and supplied, and a de-actuated state (unload state), in which air is not compressed.

The air supply system 10 includes an air drying circuit 11 and a supply circuit 12. The air drying circuit 11 and the supply circuit 12 are connected to each other and share part of the configuration. The air drying circuit 11 is connected to the ECU 80 and dries compressed air delivered from the actuated compressor 4.

The supply circuit 12 is connected to the ECU 80 and supplies air delivered from the air drying circuit 11 to a first load C21 to an eighth load C28, which are installed in the vehicle. The supply circuit 12 is provided with a first port P21 to an eighth port P28 respectively connected to the first load C21 to the eighth load C28.

Further, the air supply system 10 includes a maintenance port P12. The maintenance port P12 is a port for supplying air to the air drying circuit 11 during maintenance.

The configuration of the supply circuit 12 will now be described. The first load C21, which is connected to the first port P21 of the supply circuit 12, and the second load C22, which is connected to the second port P22, are service brake circuits. The service brake circuits actuate and release the service brakes of the front wheels and the rear wheels of the tractor 1. The third load C23, which is connected to the third port P23, is a trailer brake circuit that actuates and releases the parking brakes of the trailer 2. The fifth load C25, which is connected to the fifth port P25, is a tractor-side parking brake circuit that actuates and releases the parking brakes of the tractor 1. The fourth load C24, which is connected to the fourth port P24, and the sixth load C26, which is connected to the sixth port P26, are accessory circuits that activate or deactivate accessories. The seventh load C27, which is connected to the seventh port P27, is an inflator for tires using compressed air. The eighth load C28, which is connected to the eighth port P28, is a circuit of an air tank that stores compressed air.

The air drying circuit 11 includes an air supply passage 18. A first passage 41 to a fifth passage 45 that supply air to each load are connected from the air supply passage 18. The second passage 42 and the third passage 43 are passages through which air is supplied respectively to the first load C21 and the second load C22, which are service brake circuits. Further, the second passage 42 and the third passage 43 are connected to the fourth passage 44. Air is supplied through the fourth passage 44 to the third load C23 and the fifth load C25, which are parking brake circuits, and the fourth load C24 and the sixth load C26, which are accessory circuits. The fourth passage 44 is provided with a check valve 66 that permits the flow of air from the second passage 42 and a check valve 67 that permits the flow of air from the third passage 43. The fifth passage 45 allows the passage of air from a ninth passage 49, which is connected to the third load C23, and is provided with a check valve 45A in the middle of the fifth passage 45. The check valve 45A permits the flow of air from the ninth passage 49 and prohibits the flow of air from the air supply passage 18 to each load. Further, a passage through which air is supplied to the seventh load C27 and a passage through which air is supplied to the eighth load C28 branch from the air supply passage 18 of the air drying circuit 11.

The second passage 42 and the third passage 43 are respectively provided with pressure control valves 60 and 61 serving as protection valves. The pressure control valves 60 and 61 close when the pressure upstream of the pressure control valves 60 and 61 is greater than or equal to a predetermined value and when the pressure downstream of the pressure control valves 60 and 61 is greater than or equal to the predetermined value. Further, the second passage 42 is provided with a bypass passage 62 connected to the first passage 41 to detour the pressure control valve 60. The bypass passage 62 is provided with an orifice 64 and a check valve 65. The check valve 65 prohibits the flow from the downstream side to the upstream side of the pressure control valve 60. Even when the pressure control valve 60 is closed, air depressurized via the bypass passage 62 is supplied to the downstream side of the pressure control valve 60. In the same manner, the third passage 43 is provided with a bypass passage 62 connected to the first passage 41 to detour the pressure control valve 61 and an orifice 64 and a check valve 65.

An eighth passage 48 extending from the fourth passage 44 toward the ninth passage 49 is provided with a pressure control valve 70B and a pressure control valve 72. A seventh passage 47 extending from the fourth passage 44 toward the sixth passage 46 is provided with a pressure control valve 70A and a pressure control valve 71. The pressure control valves 70A and 70B close when the pressure downstream of the pressure control valves 70A and 70B is high. Further, the pressure control valves 71 and 72 close when the pressure upstream of the pressure control valves 71 and 72 is greater than or equal to a predetermined value and when the pressure downstream of the pressure control valves 71 and 72 is greater than or equal to the predetermined value. The sixth passage 46 further branches the passage connecting to the fourth load C24 and the sixth load C26, which are accessory circuits. A check valve 46A is provided before the sixth load C26. The ninth passage 49 further branches into the passages respectively connecting to the third load C23 and the fifth load C25, which are the parking brake circuits of the trailer. A check valve 49A is provided at the front of the fifth load C25.

A pneumatic sensor 110 (PU) that detects the air pressure of the second passage 42 is connected to the second passage 42, and a pneumatic sensor 111 (PU) that detects the air pressure of the third passage 43 is connected to the third passage 43. The pressure detected by the pneumatic sensors 110 and 111 is converted into voltage corresponding to the detected voltage and output to the ECU 80. A ground line E64, a power line E66, and a signal line E65 are connected to the pneumatic sensor 110 as wiring from the ECU 80. A connector CN1, which is highly dust-resistant and weather-resistant, is provided in the middle of the wiring. A ground line E61, a power line E63, and a signal line E62 are connected to the pneumatic sensor 111 as the wiring from the ECU 80. The connector CN1, which is shared with the pneumatic sensor 110, is provided in the middle of the wiring.

The configuration of the air drying circuit 11 will now be described. The air drying circuit 11 includes a filter 17 serving as a removal device. The filter 17 is located in the middle of the air supply passage 18, which connects the compressor 4 to the supply circuit 12. The filter 17 includes desiccant for trapping moisture and a filter portion for trapping oil.

The filter 17 causes air to pass through the desiccant, thereby removing moisture contained in the air and drying the air. Further, the filter 17 removes oil contained in the air and cleans the air using the filter portion. The air that has passed through the filter 17 is supplied to the supply circuit 12 via a check valve 19 serving as a non-return valve that permits the flow of air only toward the downstream side as viewed from the filter 17. That is, when a portion including the filter 17 is referred to as the upstream side and a portion including the supply circuit 12 is referred to as the downstream side, the check valve 19 permits the flow of air only from the upstream side to the downstream side.

In addition, a bypass passage 20 serving as a detour passage that detours the check valve 19 is arranged downstream of the filter 17 in parallel with the check valve 19. A regenerative control valve 21 serving as a regenerative device is connected to the bypass passage 20. The regenerative control valve 21 is a solenoid valve the operation of which switches along with on and off of the power. The operations of the regenerative control valve 21 are controlled by being powered on and off based on a switching circuit 120 which opens and closes the power lines.

The operation of the switching circuit 120 (SW) will now be described.

The ground line E61 and the power line E63, which branch from the power line for the pneumatic sensor 111, and the signal line E62, with which the pneumatic sensor 111 outputs voltage corresponding to an air pressure, are connected to the switching circuit 120 (SW). That is, the switching circuit 120 receives a value of the air pressure downstream of the check valve 19 to operate the regenerative control valve 21 when the value of the air pressure is in a predetermined range. This allows for elimination or reduction of wires and connectors between the ECU 80 and the switching circuit 120, thereby limiting increases in the number of the wires and the connectors. More specifically, the switching circuit 120 outputs a power line E63A, which controls connection and disconnection with the power line E63, and allows the power line E63A to be connected to the regenerative control valve 21. The switching circuit 120 receives voltage corresponding to the air pressure of the supply circuit 12 from the signal line E62. When the received voltage is a predetermined voltage corresponding to an air pressure at which a regenerative operation is to be performed, the switching circuit 120 operates the regenerative control valve 21 to open the bypass passage 20 by closing the section between the power line E63 and the power line E63A. When the received voltage does not match the predetermined voltage, the switching circuit 120 opens the section between the power line E63 and the power line E63A to stop the operation of the regenerative control valve 21, thereby blocking the bypass passage 20.

Further, the signal line E62 of the pneumatic sensor 111 only needs to be branched and connected to the switching circuit 120. This allows the pneumatic sensor 111 and the switching circuit 120 to be arranged close to each other. Thus, the distances between wires can be shortened.

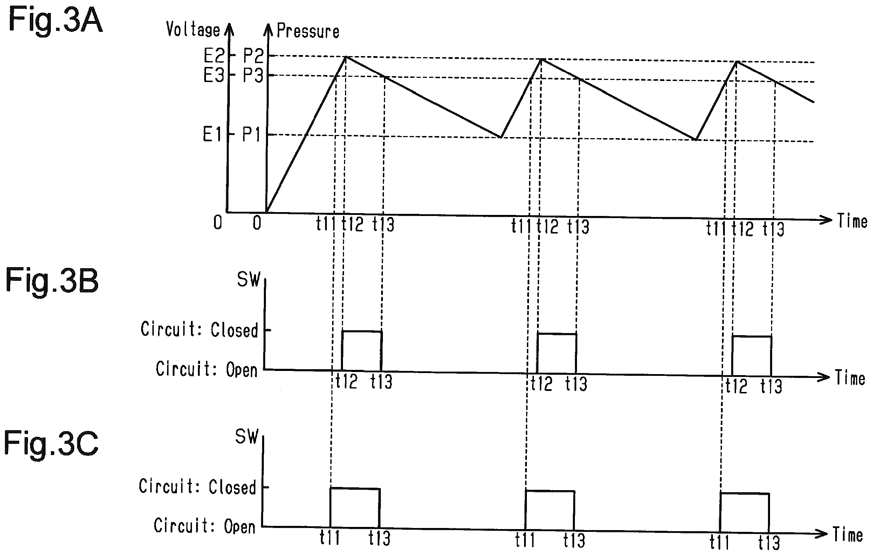

The operation of the switching circuit 120 will now be described with reference to Fig. 3. Fig. 3A shows changes in air pressure over time by straight lines to facilitate understanding.

Fig. 3A shows changes in the air pressure of the supply circuit 12 over time. Further, pressure P1 (voltage E1) is an air pressure that actuates a stopped compressor 4, and pressure P2 (voltage E2) is an air pressure that de-actuates an actuated compressor 4. In the example of Fig. 3B, the pressure P2 (voltage E2) is an air pressure that starts the regenerative operation, and the pressure P3 (voltage E3) is an air pressure that ends the regenerative operation. In the example of Fig. 3C, the pressure P3 (voltage E3) is an air pressure that starts the regenerative operation and ends the regenerative operation. As shown in Fig. 3A, the pressure P1 to the pressure P3 satisfy a relationship of pressure P1 < pressure P3 < pressure P2.

In the supply circuit 12, when the compressor 4 is actuated, the air pressure thereof increases. When the compressor 4 is actuated with an air pressure lower than the pressure P2 (for example, 0), the air pressure increases until it exceeds the pressure P3 (timing t11) and reaches the pressure P2 (timing t12), thereby the compressor 4 is de-actuated. In the supply circuit 12, subsequent to the timing t12, at which the air pressure is the pressure P2, the air pressure gradually decreases as compressed air is used. When the air pressure of the supply circuit 12 reaches the pressure P1, the compressor 4 is re-actuated. When the air pressure of the supply circuit 12 increases to the pressure P2, the compressor 4 is de-actuated again. When actuation and de-actuation of the compressor 4 are repeated in this manner, the air pressure of the supply circuit 12 is maintained between the pressure P1 and the pressure P2.

In the present embodiment, the switching circuit 120 is set so as to operate in the example shown in Fig. 3B or the example shown in Fig. 3C.

In the example of Fig. 3B, the regenerative operation is performed when the air pressure of the supply circuit 12 is between the pressure P2 (timing t12) and the pressure P3 (timing t13). That is, when detecting the voltage E2 corresponding to the pressure P2 (timing t12), the switching circuit 120 closes the section between the power line E63 and the power line E63A. Thus, the regenerative control valve 21 operates to open the bypass passage 20, thereby starting the regenerative operation. Subsequently, when the air pressure decreases and the switching circuit 120 detects the voltage E3 corresponding to the pressure P3 (timing t13), the switching circuit 120 opens the section between the power line E63 and the power line E63A. Thus, when the regenerative control valve 21 stops to close the bypass passage 20, the regenerative operation is stopped. The switching circuit 120 is an electronic circuit that includes a switching mechanism such as a relay. The voltage E2, which is a threshold value at which the circuit is closed, and the voltage E3, which is a threshold value at which the circuit is opened, are set within the switching circuit 120 in advance. Additionally, when the regenerative control valve 21 performs the regenerative operation, the operation pressure of a governor 26 is set in advance such that the governor 26 is located at an intake position.

In the example of Fig. 3C, the regenerative operation is performed while the air pressure of the supply circuit 12 is greater than or equal to the pressure P3 (between timing t11 and timing t13). That is, when detecting the voltage greater than or equal to the voltage E3 corresponding to the pressure P3 (timing t11), the switching circuit 120 closes the section between the power line E63 and the power line E63A. Thus, the regenerative control valve 21 operates to open the bypass passage 20, thereby starting the regenerative operation. Since the compressor 4 is actuated, the air pressure continues to increase. Then, the compressor 4 is de-actuated with the pressure P2 (timing t12). Subsequently, when the air pressure decreases and the switching circuit 120 detects the voltage less than the voltage E3 corresponding to the pressure P3 (timing t13), the switching circuit 120 opens the section between the power line E63 and the power line E63A. Thus, when the regenerative control valve 21 is stopped to close the bypass passage 20, the regenerative operation is stopped. Even in this case, in the same manner as the above-described example, the switching circuit 120 is an electronic circuit that includes a switching mechanism such as a relay. The voltage E3, which is a threshold value at which the circuit is opened and closed, is set within the switching circuit 120 in advance. Additionally, when the regenerative control valve 21 performs the regenerative operation and the compressor 4 is de-actuated, the operation pressure of the governor 26 is set in advance such that the governor 26 is located at the intake position.

An orifice 22 is provided in the bypass passage 20 between the regenerative control valve 21 and the filter 17. When the regenerative control valve 21 is energized, air supplied from the supply circuit 12 is delivered to the filter 17 through the bypass passage 20 in a state in which the flow rate of the air is limited by the orifice 22. The air delivered to the filter 17 flows backward through the filter 17 and passes from the downstream side to the upstream side of the filter 17. This state of the air supply system 10 is referred to as a regenerated state. The air delivered to the filter 17 is dried and cleaned air that has been supplied from the air supply passage 18 through the filter 17 to the supply circuit 12. Thus, moisture and oil trapped by the filter 17 is removed from the filter 17.

Collected liquid, which is the liquid containing moisture and oil removed from the filter 17, is delivered to a drain valve 25 serving as a discharge device. The drain valve 25 is a pneumatically-driven valve driven by an air pressure and is provided between the filter 17 and the drain port 27. The drain valve 25 is a two-port two-position valve, which changes the position between the closed position and the open position. The drain valve 25 delivers the collected liquid to the drain port 27 at the open position. The collected liquid discharged from the drain port 27 is collected in an oil separator (not shown).

The drain valve 25 and the compressor 4 are controlled by the governor 26. The governor 26 is a pneumatically-driven valve driven by an air pressure and operated in accordance with air pressure of the supply circuit 12. When the air pressure of the supply circuit 12 supplied to the port is less than a predetermined pressure, the governor 26 is located at an exhaust position where a port side receiving a pneumatic signal of the drain valve 25 and the passage between the governor 26 and the compressor 4 are opened to the atmosphere. When the air pressure of the supply circuit 12 supplied to the port is greater than or equal to the predetermined pressure, the governor 26 is located at a supply position where a pneumatic signal is transmitted to the drain valve 25 and the compressor 4 based on the air supplied from the air supply passage 18.

The drain valve 25 is kept at the closed position in a state in which a pneumatic signal is not received by the port, that is, in a state in which air is not supplied. The drain valve 25 is moved to the open position when receiving a pneumatic signal. Further, when the pressure of the input port corresponding to the compressor 4 of the drain valve 25 exceeds an upper limit value to become high, the drain valve 25 is forcibly switched to the open position. The drain valve 25 is also opened by a test signal of the compressed air received through the maintenance port P12.

When receiving a pneumatic signal from the governor 26, the compressor 4 is de-actuated. For example, when the pressure of the first load C21 and the second load C22 reaches an upper limit pressure, dried air does not need to be supplied to the first load C21 and the second load C22. The pressure of the first load C21 and the second load C22 is detected by the port receiving the pneumatic signal of the governor 26. The governor 26 is located at the supply position when the air pressure of the supply circuit 12 supplied to the port is greater than or equal to the predetermined pressure. This causes the governor 26 to supply the pneumatic signal to the compressor 4 and the drain valve 25. The drain valve 25 opens when receiving the pneumatic signal from the governor 26.

As described above, the present embodiment has the following advantages.
(1) Traditionally, since the ECU 80 is used to operate the air drying circuit, a command from the ECU 80 can be used to operate the air drying circuit. However, this requires new wires and connectors having weather resistance to be provided between the ECU 80 and the air drying circuit 11. Thus, the switching circuit 120 receives a value of the air pressure downstream of the check valve 19 to operate the regenerative control valve 21 when the value of the air pressure is in the predetermined range. That is, this allows for elimination or reduction of wires and connectors between the ECU 80 and the switching circuit 120. Thus, increases in the number of the wires and connectors are reduced.
(2) The switching circuit 120 directly receives voltage output by the pneumatic sensor 111 and operates the regenerative control valve 21 based on the received voltage. That is, since the switching circuit 120 receives the output voltage of the pneumatic sensor 111 without being changed, this allows for elimination or reduction of wires and connectors between the ECU 80 and the switching circuit 120. This also keeps the determination accuracy high because a determination is made based on the output voltage of the pneumatic sensor 111.
(3) After the air pressure of the switching circuit 120 becomes high (pressure P2), the regenerative control valve 21 can be operated while the air pressure is decreasing. This prevents the regenerative operation from being performed while the air pressure is increasing. Further, the regeneration of the removal device can be efficiently performed by starting the regenerative operation from a high air pressure.
(4) The power lines of the regenerative control valve 21 are shared with the pneumatic sensor 111. Thus, increases in the number of wires and connectors are prevented or limited in the power lines.
(5) The air pressure downstream of the pressure control valve 61 supplied to the brake circuits and the like can be detected using the pneumatic sensor 111, which is usually arranged.

### Second Embodiment

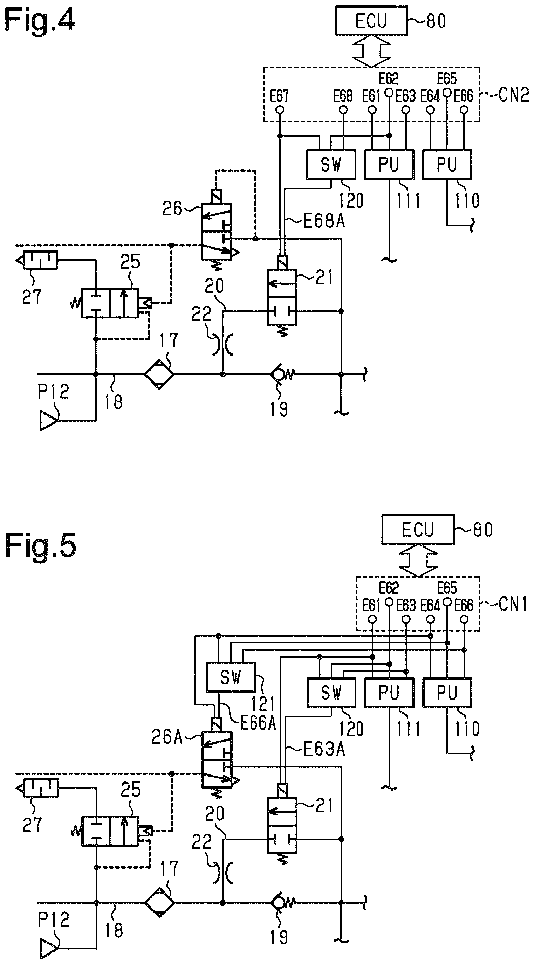

An air supply system according to a second embodiment will now be described with reference to Fig. 4. The present embodiment differs from the first embodiment in power lines connected to the regenerative control valve 21.

As shown in Fig. 4, a ground line E67 and a power line E68 of a connector CN2 and the signal line E62, which outputs voltage corresponding to an air pressure output by the pneumatic sensor 111, are connected to the switching circuit 120. Further, the switching circuit 120 controls opening and closing of the section between the power line E68 and a power line E68A and connects the power line E68A to the regenerative control valve 21. The switching circuit 120 receives the voltage corresponding to the air pressure of the supply circuit 12 from the signal line E62. When the received voltage is a predetermined voltage corresponding to the air pressure at which the regenerative operation is to be performed, the switching circuit 120 closes the section between the power line E68 and the power line E68A to open the bypass passage 20. When the received voltage is not the predetermined voltage, the switching circuit 120 opens the section between the power line E68 and the power line E68A to block the bypass passage 20.

As described above, the present embodiment has the following advantage in addition to advantages (1) to (3) and (5) of the first embodiment.

(6) Separating the power line E63 and the ground line E61 of the pneumatic sensor 111 from the power line E68 and the ground line E67 of the regenerative control valve 21 limits situations in which noise generated during operation of the regenerative control valve 21 is superimposed on a detected value of the pneumatic sensor 111.

### Third Embodiment

An air supply system according to a third embodiment will now be described with reference to Fig. 5. The present embodiment differs from the first embodiment in that a governor 26A is a solenoid valve.

As shown in Fig. 5, the air supply system includes the governor 26A, which serves as a governor device, and a switching circuit 121 (SW), which has the same configuration as the switching circuit 120.

The governor 26A is a solenoid valve that functions differently when powered on and off. The ground line E64 and a power line E66A are connected to the governor 26A. The operations of the governor 26A are controlled by being powered on and off when the switching circuit 121 opens and closes the section between the power line E66 and the power line E66A.

The ground line E64 and the power line E66, which branch from the pneumatic sensor 110, and the signal line E65, which outputs voltage corresponding to an air pressure output by the pneumatic sensor 111, are connected to the switching circuit 121. Further, the switching circuit 121 controls opening and closing of the section between the power line E66 and the power line E66A and connects the power line E66A to the governor 26A. The switching circuit 121 receives the voltage corresponding to the air pressure of the supply circuit 12 from the signal line E65. When the received voltage is the predetermined voltage corresponding to the air pressure at which the regenerative operation is to be performed, the switching circuit 120 closes the section between the power line E66 and the power line E66A to set the governor 26A at the intake position. When the received voltage is not the predetermined voltage, the switching circuit 120 opens the section between the power line E63 and the power line E63A to set the governor 26A at the exhaust position. This causes the governor 26A to supply a pneumatic signal to the compressor 4 and the drain valve 25. The drain valve 25 opens when receiving the pneumatic signal from the governor 26A. Thus, the regenerative control valve 21 and the governor 26A are both solenoid valves.

As described above, the present embodiment has the following advantages in addition to advantages (1) to (5) of the first embodiment.

(7) The second pneumatic sensor 110 and the second switching circuit 121 can be arranged close to each other. Thus, the distances between wires are shortened. This allows for elimination or reduction of wires and connectors between the ECU 80 and the switching circuit 121. This also keeps the determination accuracy high because a determination is made based on the output voltage of the second pneumatic sensor 110.

(8) The power lines connected to the governor 26A, which drives the drain valve 25, are shared with the second pneumatic sensor 110. Thus, increases in the number of wires and connectors are prevented or limited in the power lines.

### Fourth Embodiment

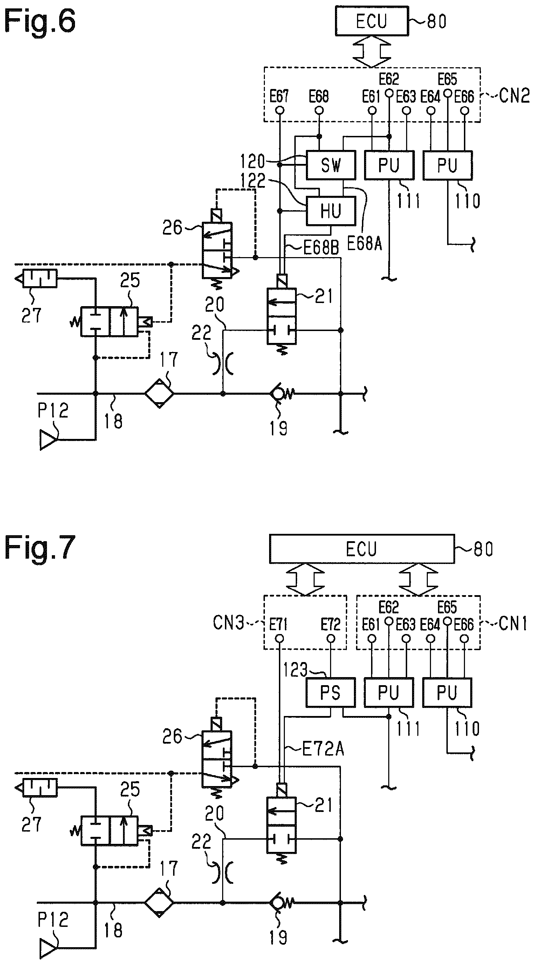

An air supply system according to a fourth embodiment will be described with reference to Fig. 6. The present embodiment differs from the second embodiment in that the switching circuit 120 and a humidity sensor 122 (HU) are connected in series with the power line E68 of the regenerative control valve 21.

As shown in Fig. 6, the ground line E67 and the power line E68 of the connector CN2 and the signal line E62, which outputs the voltage corresponding to the air pressure output by the pneumatic sensor 111, are connected to the switching circuit 120. Further, the switching circuit 120 controls opening and closing of the section between the power line E68 and the power line E68A and connects the power line E68A to the humidity sensor 122.

The humidity sensor 122 detects the humidity of air downstream of the filter 17. Based on the detected humidity, the humidity sensor 122 controls the opening and closing of a switch arranged between the power line E68A, which is connected to the switching circuit 120, and a power line E68B, which is connected to the regenerative control valve 21. When the humidity is greater than or equal to a predetermined value, the humidity sensor 122 closes the section between the power line E68A and the power line E68B. When the humidity is less than the predetermined value, the humidity sensor 122 opens the section between the power line E68A and the power line E68B.

Thus, when the switching circuit 120 closes the section between the power line E68 and the power line E68A based on the air pressure and the humidity sensor 122 closes the section between the power line E68A and the power line E68B, the bypass passage 20 opens. In other cases, that is, when at least one of the section between the power line E68 and the power line E68A and the section between the power line E68A and the power line E68B is open, the bypass passage 20 is blocked so that the regenerative operation is not performed.

As described above, the present embodiment has the following advantage in addition to advantages (1) to (3), (5), and (6) of the first and second embodiments.

(9) When the humidity of air is high, a large amount of moisture is dehumidified and thus the regenerative operation needs to be performed. In contrast, when the humidity of air is low, a small amount of moisture is dehumidified and thus the regenerative operation does not need to be performed. When the humidity is a predetermined humidity, the regenerative control valve 21 is supplied with power to execute the regenerative operation. In contrast, when the humidity is not the predetermined humidity, the regenerative control valve 21 is not supplied with power and the regenerative operation is not executed. This prevents compressed air from being consumed through the regenerative operation.

### Fifth Embodiment

An air supply system according to a fifth embodiment will now be described with reference to Fig. 7. The present embodiment differs from the first embodiment in that the switching circuit 120 is replaced with a pressure switch 123 (PS) serving as a switching circuit.

As shown in Fig. 7, a ground line E71 and a power line E72 of a connector CN3 are connected to the pressure switch 123, and a passage from the third passage 43 is connected to the pressure switch 123. That is, the pressure switch 123 receives an air pressure supplied to the pressure of the second load C22 detected by the pneumatic sensor 111. Further, the pressure switch 123 controls opening and closing of the section between the power line E72 and the power line E72A and connects the power line E72A to the regenerative control valve 21. When the supplied air pressure corresponds to the air pressure at which the regenerative operation is to be performed, the pressure switch 123 closes the section between the power line E72 and the power line E72A to operate the regenerative control valve 21 and open the bypass passage 20. In other voltages, the pressure switch 123 opens the section between the power line E72 and the power line E72A to stop the regenerative control valve 21 and block the bypass passage 20.

As described above, the present embodiment has the following advantage in addition to advantage (1) of the first embodiment.

(10) The pressure switch 123 is arranged only between the power lines of the regenerative control valve 21 and thus does not need to receive a pneumatic signal or an opening/closing command from the ECU 80. This limits increases in the number of the signal lines between the ECU 80 and the pressure switch 123.

### Other Embodiments

Each of the above-described embodiments may be modified as follows.

In each of the above-described embodiments, the switching circuit 120 receives the voltage corresponding to the air pressure of the supply circuit 12 from the pneumatic sensor 111. Instead, the switching circuit may receive the voltage corresponding to the air pressure of the supply circuit 12 from another pneumatic sensor.

In each of the above-described embodiments, the filter 17 includes desiccant and the filtering portion. Instead, the filter 17 may include only one of desiccant and the filtering portion.

The air drying circuit 11 may be a first module that accommodates the filter 17 and the like in a case. The supply circuit 12 may be a second module that accommodates each valve device in a case. At least one of the case of the first module and the case of the second module may be provided with a coupling portion that fixes the cases to be coupled to each other. The first module and the second module are connected to each other by a piping unit such that air can flow in and out and are electrically connected. The piping unit includes a connection portion connected to the first module and a connection portion connected to the second module.

In each of the above-described embodiments, the air supply system 10 is mounted in the articulated vehicle including the tractor 1 and the trailer 2. Alternatively, the air supply system may be mounted in other vehicles such as passenger cars, railway vehicles, and the like.

### Description of Reference Characters

1) Tractor; 2) Trailer; 3) Engine; 4) Compressor; 6) Service Brake Chamber; 7) Spring Brake Chamber, 8) Trailer Control Valve; 10) Air Supply System; 11) Air Drying Circuit; 12) Supply Passage; 17) Filter; 18) Air Supply Passage; 19) Check Valve; 20) Bypass Passage; 21) Regenerative Control Valve; 22) Orifice; 25) Drain Valve; 26, 26A) Governor; 27) Drain Port; 41) First Passage; 42) Second Passage; 43) Third Passage; 44) Fourth Passage; 45) Fifth Passage; 45A) Check Valve; 46) Sixth Passage; 46A) Check Valve; 49) Ninth Passage; 49A) Check Valve; 60, 61) Pressure Control Valve; 62) Bypass Passage; 64) Orifice; 65, 66, 67) Check Valve; 70A, 70B, 71, 72) Pressure Control Valve; 110, 111) Pneumatic Sensor; 120, 121) Switching Circuit; 122) Humidity Sensor; 123) Pressure Switch; CN1, CN2, CN3) Connector; E61, E64, E67) Ground Line; E62, E65) Signal Line; E63, E63A, E66, E66A, E68, E68A, E68B) Power Line; E71) Ground Line; E72) Power Line; P12) Maintenance Port; P21) First Port; P22) Second Port; P23) Third Port; P24) Fourth Port; P25) Fifth Port; P26) Sixth Port; P27) Seventh Port; P28) Eighth Port; E72A) Power Line

## Claims

1. An air supply system (10), comprising:
a non-return valve (19) that allows air to flow from an upstream side to a downstream side, the air having been supplied from a compressor (4), and moisture and oil contained in the air having been removed from the air by a removal device (17);
a discharge device (25) that opens a section between the compressor (4) and the removal device (17) to an atmosphere when an air pressure downstream of the non-return valve (19) is higher than a predetermined pressure;
a regenerative device (21) that supplies the air downstream of the non-return valve (19) in a direction of the discharge device (25) from the non-return valve (19) to the removal device (17) by opening a detour passage (20) arranged in parallel with the non-return valve (19) based on supply of electricity;
a switching circuit (120) that receives a value of the air pressure downstream of the non-return valve (19) and supplies electricity to the regenerative device (21) to operate the regenerative device (21) when the value of the air pressure is in a predetermined range; and
a pneumatic sensor (111) that outputs voltage corresponding to the air pressure detected on the downstream side of the non-return valve (19), wherein
the switching circuit (120) receives the voltage output by the pneumatic sensor (111) as the value of the air pressure downstream of the non-return valve (19) and supplies electricity to the regenerative device (21) to operate the regenerative device (21) when the received voltage is a predetermined voltage,
**characterized in that**
a power line (E63A) that branches from a power line (E63) for the pneumatic sensor (111) is connected to the regenerative device (21), and
the switching circuit (120) supplies electricity to the regenerative device (21) by completing the branched power line (E63A).

2. The air supply system (10) according to claim 1, wherein
the switching circuit (120) uses, as the predetermined voltage, a start voltage that starts supply of electricity to the regenerative device (21) and a stop voltage that stops the supply of the electricity started by the start voltage, and
the start voltage is set to be higher than the stop voltage.

3. The air supply system (10) according to claim 1 or 2, comprising a humidity sensor (122) that detects humidity, wherein
the humidity sensor (122) closes a switch when the detected humidity is in a predetermined range, and
the switch is connected in series with the regenerative device (21) in a middle of the branched power line.

4. The air supply system (10) according to any one of claims 1 to 3, wherein the pneumatic sensor (111) detects an air pressure downstream of a protection valve (61) arranged downstream of the non-return valve (19).

5. The air supply system (10) according to claim 4, wherein the protection valve (61) is a first protection valve, the pneumatic sensor (111) is a first pneumatic sensor, and the switching circuit (120) is a first switching circuit, the air supply system (10) comprising:
a second protection valve (60) arranged in parallel with the first protection valve (61);
a second pneumatic sensor (110) that detects an air pressure downstream of the second protection valve (60); and
a second switching circuit (121) connected to the second pneumatic sensor (110),
wherein the second switching circuit (121) receives voltage output by the second pneumatic sensor (110) and opens the discharge device (25) to the atmosphere when the received voltage is a predetermined voltage.

6. The air supply system (10) according to claim 5, comprising a governor device (26A) to which a power line (E66A) that branches from a power line (E66) for the second pneumatic sensor (110) is connected via the second switching circuit (121), the governor device (26A) supplying an air pressure to the discharge device (25) when supplied with electricity through the power line (E66), wherein
the discharge device (25) is opened to the atmosphere based on the air pressure supplied from the governor device (26A), and
the second switching circuit (121) supplies electricity to the governor device (26A) by completing the branched power line (E66A).

## Patentansprüche

1. Luftzufuhr-System (10), das umfasst:
ein Rückschlagventil (19), das zulässt, dass Luft von einer stromauf liegenden Seite zu einer stromab liegenden Seite strömt, wobei die Luft von einem Kompressor (4) zugeführt worden ist und in der Luft enthaltene Feuchtigkeit und Öl durch eine Entfernungsvorrichtung (17) aus der Luft entfernt worden sind;
eine Ableitvorrichtung (25), die einen Abschnitt zwischen dem Kompressor (4) und der Entfernungsvorrichtung (17) zu einer Umgebung hin öffnet, wenn ein Luftdruck stromab von dem Rückschlagventil (19) höher ist als ein vorgegebener Druck;
eine regenerierende Vorrichtung (21), die die Luft stromab von dem Rückschlagventil (19) in einer Richtung der Ableitvorrichtung (25) von dem Rückschlagventil (19) der Entfernungsvorrichtung (17) zuführt, indem sie einen parallel zu dem Rückschlagventil (19) angeordneten Umleitungs-Kanal (20) auf Basis von Zufuhr von Elektrizität öffnet;
einen Schaltkreis (120), der einen Wert des Luftdrucks stromab von dem Rückschlagventil (19) empfängt und der regenerierenden Vorrichtung (21) Elektrizität zuführt, um die regenerierende Vorrichtung (21) zu betätigen, wenn der Wert des Luftdrucks in einem vorgegebenen Bereich liegt; sowie
einen Luftdruck-Sensor (111), der Spannung ausgibt, die dem an der stromab liegenden Seite des Rückschlagventils (19) erfassten Luftdruck entspricht, wobei der Schaltkreis (120) die von dem Luftdruck-Sensor (111) ausgegebene Spannung als den Wert des Luftdrucks stromab von dem Rückschlagventil (19) empfängt und der regenerierenden Vorrichtung (21) Elektrizität zuführt, um die regenerierende Vorrichtung (21) zu betätigen, wenn die empfangene Spannung eine vorgegebene Spannung ist,
**dadurch gekennzeichnet, dass**
eine Stromleitung (E63A), die von einer Stromleitung (E63) für den Luftdruck-Sensor (111) abzweigt, mit der regenerierenden Vorrichtung (21) verbunden ist, und
der Schaltkreis (120) der regenerierenden Vorrichtung (21) Strom zuführt, indem er die abzweigende Stromleitung (E63A) schließt.

2. Luftzufuhr-System (10) nach Anspruch 1, wobei
der Schaltkreis (120) als die vorgegebene Spannung eine Start-Spannung, die Zufuhr von Elektrizität zu der regenerierenden Vorrichtung (21) startet, und eine Stopp-Spannung verwendet, die die durch die Startspannung gestartete Zufuhr von Elektrizität stoppt, und
die Start-Spannung höher eingestellt ist als die Stopp-Spannung.

3. Luftzufuhr-System (10) nach Anspruch 1 oder 2, das einen Feuchtigkeits-Sensor (122) umfasst, der Feuchtigkeit erfasst, wobei
der Feuchtigkeits-Sensor (122) einen Schalter schließt, wenn die erfasste Feuchtigkeit in einem vorgegebenen Bereich liegt, und
der Schalter in Reihe mit der regenerierenden Vorrichtung (21) in einer Mitte der abzweigenden Stromleitung verbunden ist.

4. Luftzufuhr-System (10) nach einem der Ansprüche 1 bis 3, wobei der Luftdruck-Sensor (111) einen Luftdruck stromab von einem stromab von dem Rückschlagventil (19) angeordneten Schutzventil (61) erfasst.

5. Luftzufuhr-System (10) nach Anspruch 4, wobei das Schutzventil (61) ein erstes Schutzventil ist, der Luftdruck-Sensor (111) ein erster Luftdruck-Sensor ist, und der Schaltkreis (120) ein erster Schaltkreis ist, wobei das Luftzufuhr-System (10) umfasst:
ein zweites Schutzventil (60), das parallel zu dem ersten Schutzventil (61) angeordnet ist;
einen zweiten Luftdruck-Sensor (110), der einen Luftdruck stromab von dem zweiten Schutzventil (60) erfasst; sowie
einen zweiten Schaltkreis (121), der mit dem zweiten Luftdruck-Sensor (110) verbunden ist,
wobei der zweite Schaltkreis (121) von dem zweiten Luftdruck-Sensor (110) ausgegebene Spannung empfängt und die Ableitvorrichtung (25) zu der Umgebung hin öffnet, wenn die empfangene Spannung eine vorgegebene Spannung ist.

6. Luftzufuhr-System (10) nach Anspruch 5, das eine Regelungsvorrichtung (26A) umfasst, mit der über den zweiten Schaltkreis (121) eine Stromleitung (E66A) verbunden ist, die von einer Stromleitung (E66) für den zweiten Luftdruck-Sensor (110) abzweigt, wobei die Regelungsvorrichtung (26A) der Ableitvorrichtung (25) einen Luftdruck zuführt, wenn ihr über die Stromleitung (E 66) Elektrizität zugeführt wird, und
die Ableitvorrichtung (25) auf Basis des von der Regelungsvorrichtung (26A) zugeführten Luftdrucks zu der Umgebung hin geöffnet wird, und
der zweite Schaltkreis (121) der Regelungsvorrichtung (26A) Elektrizität zuführt, indem er die abzweigende Stromleitung (E66A) schließt.

## Revendications

1. Système d'alimentation en air (10), comprenant :
un clapet anti-retour (19) qui permet à l'air de s'écouler d'un côté amont vers un côté aval, l'air ayant été fourni par un compresseur (4), et l'humidité et l'huile contenues dans l'air ayant été éliminées de l'air par un dispositif d'élimination (17) ;
un dispositif de décharge (25) qui ouvre une section entre le compresseur (4) et le dispositif d'élimination (17) à une atmosphère lorsqu'une pression d'air en aval du clapet anti-retour (19) est supérieure à une pression prédéterminée ;
un dispositif de régénération (21) qui fournit l'air en aval du clapet anti-retour (19) dans un sens du dispositif de décharge (25) depuis le clapet anti-retour (19) vers le dispositif d'élimination (17) en ouvrant un passage de déviation (20) agencé en parallèle avec le clapet anti-retour (19) sur la base d'une alimentation en électricité ;
un circuit de commutation (120) qui reçoit une valeur de la pression d'air en aval du clapet anti-retour (19) et fournit de l'électricité au dispositif de régénération (21) pour faire fonctionner le dispositif de régénération (21) lorsque la valeur de la pression d'air se trouve dans une plage prédéterminée ; et
un capteur pneumatique (111) qui émet une tension correspondant à la pression d'air détectée sur le côté aval du clapet anti-retour (19), dans lequel
le circuit de commutation (120) reçoit la tension émise par le capteur pneumatique (111) en tant que valeur de la pression d'air en aval du clapet anti-retour (19) et fournit de l'électricité au dispositif de régénération (21) pour faire fonctionner le dispositif de régénération (21) lorsque la tension reçue est une tension prédéterminée,
**caractérisé en ce que**
une ligne d'alimentation (E63A) qui part d'une ligne d'alimentation (E63) pour le capteur pneumatique (111) est connectée au dispositif de régénération (21), et
le circuit de commutation (120) fournit de l'électricité au dispositif de régénération (21) en complétant la ligne d'alimentation (E63A) ramifiée.

2. Système d'alimentation en air (10) selon la revendication 1, dans lequel
le circuit de commutation (120) utilise, comme tension prédéterminée, une tension de démarrage qui démarre l'alimentation en électricité du dispositif de régénération (21) et une tension d'arrêt qui arrête l'alimentation en électricité démarrée par la tension de démarrage, et
la tension de démarrage est réglée pour être supérieure à la tension d'arrêt.

3. Système d'alimentation en air (10) selon la revendication 1 ou 2, comprenant un capteur d'humidité (122) qui détecte l'humidité, dans lequel
le capteur d'humidité (122) ferme un interrupteur lorsque l'humidité détectée se trouve dans une plage prédéterminée, et
le commutateur est connecté en série avec le dispositif de régénération (21) au milieu de la ligne électrique ramifiée.

4. Système d'alimentation en air (10) selon l'une quelconque des revendications 1 à 3, dans lequel le capteur pneumatique (111) détecte une pression d'air en aval d'une vanne de protection (61) disposée en aval du clapet anti-retour (19).

5. Système d'alimentation en air (10) selon la revendication 4, dans lequel la vanne de protection (61) est une première vanne de protection, le capteur pneumatique (111) est un premier capteur pneumatique, et le circuit de commutation (120) est un premier circuit de commutation, le système d'alimentation en air (10) comprenant :
une seconde vanne de protection (60) disposée en parallèle avec la première vanne de protection (61) ;
un second capteur pneumatique (110) qui détecte une pression d'air en aval de la seconde vanne de protection (60) ; et
un second circuit de commutation (121) connecté au second capteur pneumatique (110), dans lequel le second circuit de commutation (121) reçoit une tension délivrée par le second capteur pneumatique (110) et ouvre le dispositif de décharge (25) à l'atmosphère lorsque la tension reçue est une tension prédéterminée.

6. Système d'alimentation en air (10) selon la revendication 5, comprenant un dispositif de régulation (26A) auquel est connectée, *via* le second circuit de commutation (121), une ligne d'alimentation (E66A) qui part d'une ligne d'alimentation (E66) pour le second capteur pneumatique (110), le dispositif de régulation (26A) fournissant une pression d'air au dispositif de décharge (25) lorsqu'il est alimenté en électricité par la ligne d'alimentation (E66), dans lequel
le dispositif de décharge (25) est ouvert à l'atmosphère sur la base de la pression d'air fournie par le dispositif de régulation (26A), et
le second circuit de commutation (121) fournit de l'électricité au dispositif de régulation (26A) en complétant la ligne d'alimentation (E66A) ramifiée.
